Europäisches Patentamt

European Patent Office

Office européen des brevets

(19)

(11) Publication number: **0 383 076**

**A1**

(12) # EUROPEAN PATENT APPLICATION

(21) Application number: **90101563.6**

(51) Int. Cl.⁵: **A01F 15/07**

(22) Date of filing: **26.01.90**

(30) Priority: **30.01.89 GB 8901955**

(43) Date of publication of application:
**22.08.90 Bulletin 90/34**

(84) Designated Contracting States:
**DE ES FR GB IT NL**

(71) Applicant: **DEERE & COMPANY**
**1 John Deere Road**
**Moline, Illinois 61265(US)**

(72) Inventor: **Bertrand, Raymond**
**242A, Rue de la Montagne**
**F-57200 Sarreguemines(FR)**
Inventor: **Pfrimmer, Ernest**
**18, Rue de la Foret**
**F-57520 Roulhing(FR)**
Inventor: **Viaud, Jean**
**18, Rue de l'Ecole**
**F-57200 Sarreguemines(FR)**
Inventor: **Laberheim, René**
**38, Rue Principale**
**F-57720 Eschviller(FR)**

(74) Representative: **Collins, Geoffrey Stainton et al**
**c/o Reddie & Grose 16 Theobalds Road**
**London WC1X 8PL(GB)**

(54) **Machine for forming cylindrical bales of crop.**

(57) A baling machine for forming large cylindrical bales of hay or straw has a baling chamber (56) in which the crop is rolled into a bale by oppositely moving runs (52, 54) of side-by-side belts (48). The baling chamber (56) is fed through its inlet (58) by a unit (60), picking the crop up from a windrow (160), via a feeder fork mechanism (62). Crop enters the baling chamber (56) through a nip (160) formed between a bale-supporting roll (36, 236), over which the belts (48) are trained, and the growing bale core (64).

The bale-supporting roll (36, 236, 336) raises and lowers the bale core (64) in a cycle. However, after being raised the bale core tends not to remain in contact with the roll (36, 236) since it is rather slow in descent due to inertia and frictional forces. The effect of this is to cause the nip (160) to be enlarged in this part of the cycle allowing the crop to advance more readily through the nip (160) thereby reducing any tendency for crop blockage to occur at the inlet (58).

FIG. 2

FIG. 9

## Machine for forming cylindrical bales of crop

This invention relates to a machine for forming cylindrical bales of crop having a baling chamber for rolling the crop into a bale, with an inlet for the crop and side walls, and a bale-supporting roll at the inlet disposed so that the crop can be fed to the baling chamber between the roll and the bale.

Machines, towed by a tractor, for forming large cylindrical bales of hay (so called "round" balers) are well known. As the machine advances, the crop is removed from a windrow by a pick-up mechanism and delivered rearwardly to the inlet of a baling chamber where it is rolled into a bale between sets of oppositely moving belts, the growing bale rotating about a horizontal axis and the baling chamber expanding with the bale. The belts are trained over rolls which extend laterally of the machine and most of which are journalled at either end in the sides of the machine. One of the rolls is directly driven and the belts and other rolls are thus driven thereby. The sides of the chamber are limited by walls against which the ends of the bale press.

The configuration of the rolls and belts is such that crop is fed into the chamber between belts, trained over a support roll at the inlet, and the growing bale. Under certain conditions plugging may tend to occur at the inlet when the bale has become large because the crop fails to be drawn into the chamber quick enough through the nip between these belts and the bale.

The present invention reduces this tendency to plug.

According to the present invention the roll is arranged so that, as it turns, it raises the bale and allows it to descend in a cycle, the bale being a sufficiently tight fit against the side walls of the baling chamber that the bale descends more slowly than it is raised and a gap is thereby opened between the bale and roll after the bale has been raised so as to facilitate advancement of crop into the chamber therethrough.

With the gap opened between the bale and roll, crop can more easily enter the chamber and plugging is not so likely to occur.

Although the invention is intended primarily to be applied to belt-type round balers as described above, it can be used in relation to those round balers which are beltless and in which the baling chamber is defined simply by rolls.

Embodiments of the invention will now be described with reference to the accompanying diagrammatic drawings in which:

Figure 1 is an elevational view of the right hand side (considered when facing the direction of advancement) of a baling machine with a chamber for forming large cylindrical bales of hay or straw, showing in broken lines the disposition of transverse rolls and of belts trained round the rolls within the machine;

Figure 2 is an elevational view similar to Figure 1, but with the right hand side of the machine removed;

Figure 3 is a perspective view looking from the front right of the inlet to the baling chamber;

Figure 4 is a detail view from the right of the inlet to the baling chamber of Figures 1 and 2 showing in particular an oval inlet roll at a "high" position;

Figure 5 is a detail view of the inlet roll of Figure 4 at a "low" position;

Figure 6 is a detail view of an alternative inlet roll in a "high" position;

Figure 7 is a detail view of the inlet roll of Figure 6 in a "mid" position;

Figure 8 is a detail view of the inlet roll of Figures 6 and 7 in a "low" position; and

Figure 9 is a detail view of a further alternative inlet roll in a "mid" position.

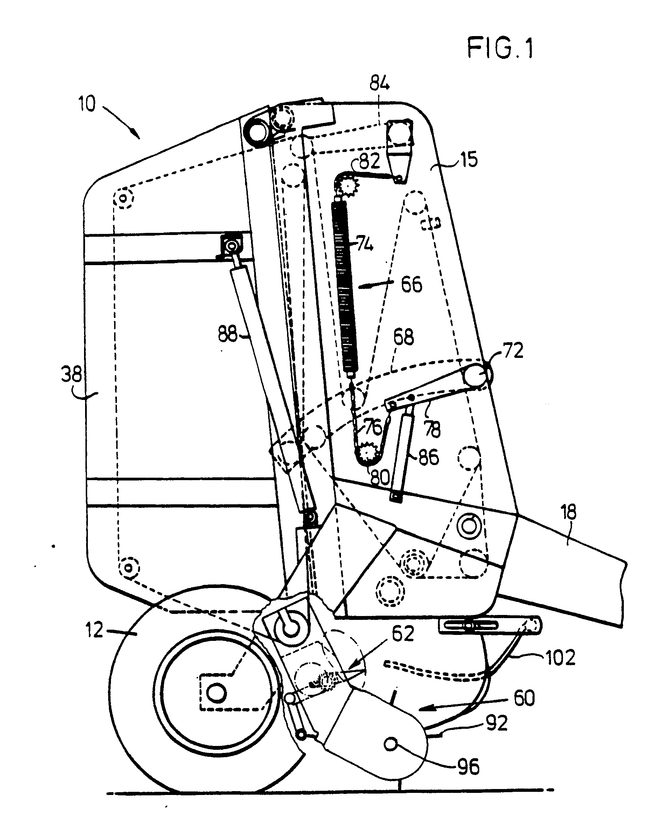

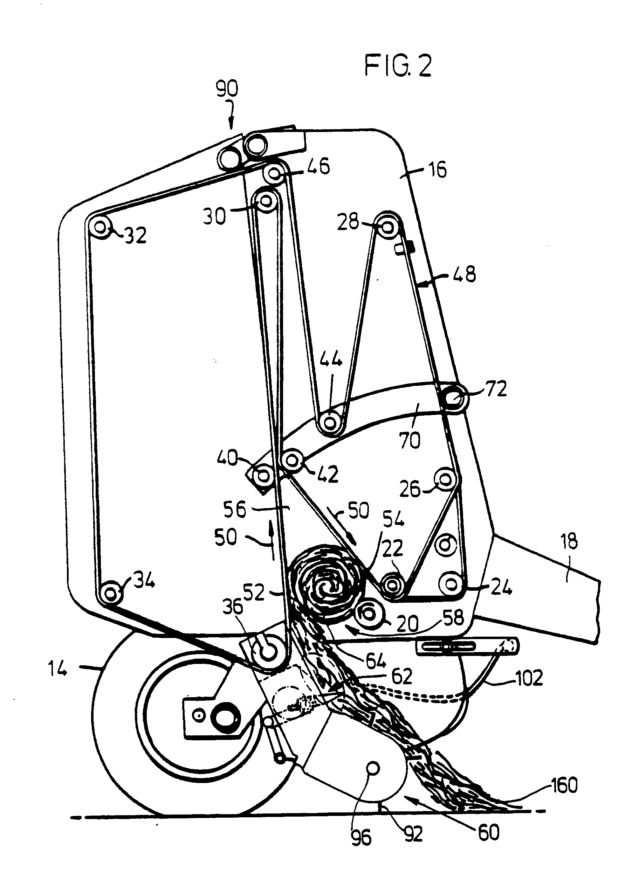

In the drawings (and particularly in Figures 1 and 2), the machine includes a main frame 10 mounted on a pair of wheels 12, 14. The main frame 10 has a pair of upright, opposite, fore-and-aft extending right and left side walls 15, 16 connected by transverse beams. A draft tongue 18 is rigid with a cross beam (not shown) at the front of the frame 10 and extends forwardly for attaching the baler to a tractor (not shown) which draws the machine.

A plurality of driven lateral rolls, shown in broken lines in Figure 1 and in full lines in Figure 2, extends over the width of the machine. One set of rolls 20, 22, 24, 26, 28, 30 is journalled in a forward fixed portion of either side wall, whilst a further set constituted by rolls 32, 34, 36 is journalled in a rearward swingable gate portion 38 of the side walls. There is also a pair of chamber restricting rolls 40, 42 and take-up and tensioning rolls 44, 46.

Six rubber belts 48 are trained side-by-side over the rolls, with the exception of the roll 20 which acts as a stripper roll, to provide the configuration shown in Figures 1 and 2 and they move in the direction indicated by arrows 50, the stripper roll 20 being driven anti-clockwise as viewed in the two Figures. However, as shown in Figure 2, alternate belts only are trained over the lower foremost roll 24, whilst the remaining belts by-pass the roll 24 and run directly between the roll 22, which is at the same horizontal level as the roll 24, and the roll 26 above. This creates, as explained and claimed in our European patent application 82106409, a staggered array of belts affording the release of stray crop through gaps, formed as a result of the staggering, between neighbouring belts. Upwardly extending runs 52, 54 of the belts 48 provide with the side walls a bale-forming chamber 56 which has an inlet 58 for crop received from a pick-up 60 and feeder fork mechanism 62 beneath the inlet.

In order to accomodate the increasing diameter of a growing bale core 64 in the bale-forming chamber 56, the size of the chamber must also increase and a belt take-up and tensioning mechanism 66 is provided for this purpose at either side of the machine. These mechanisms include: a pair of arms 68, 70 which are mounted on a horizontal transverse pivot shaft 72 at the forward end of the main frame 10; the take-up and tensioning roll 44 which is supported at either end at an intermediate location on the arms 68, 70; and the pair of chamber restricting rolls 40, 42 supported at the free end of the arms. The arms 68, 70 are biased in an anti-clockwise direction by a pair of springs one on either side of the main frame 10 of which just the right hand spring 74 is shown and only its arrangement will be described, the other being similar. The spring 74 acts through a chain 76, at its lower end, on a bias arm 78 connected rigidly to the pivot shaft 72, the chain 76 being trained over a sprocket 80. At its upper end a further chain 82 similarly connects the spring 74 to one end of a bell crank 84, and the other end of the bell crank bears one end of the take-up and tensioning roll 46. The bias arm 78 is also restrained by a piston and cylinder unit 86 pivotally connected at one end to the free end of the bias arm 78 and at the other to the associated right hand side wall 15 of the main frame 10. A similar arrangement is provided on the left hand side of the machine so that, for example, the roll 46 is carried by bell cranks on either side.

The rear gate portion 38 is movable by a pair of upwardly extending hydraulic piston and cylinder units on either side of the main frame 10 of which only a right hand unit 88 is shown which is pivotally connected at its lower end to the forward fixed portion of the side wall 16 and at its upper end to the gate portion 38 which is swingable upwardly and downwardly about a pivot arrangement 90 at its upper forward region.

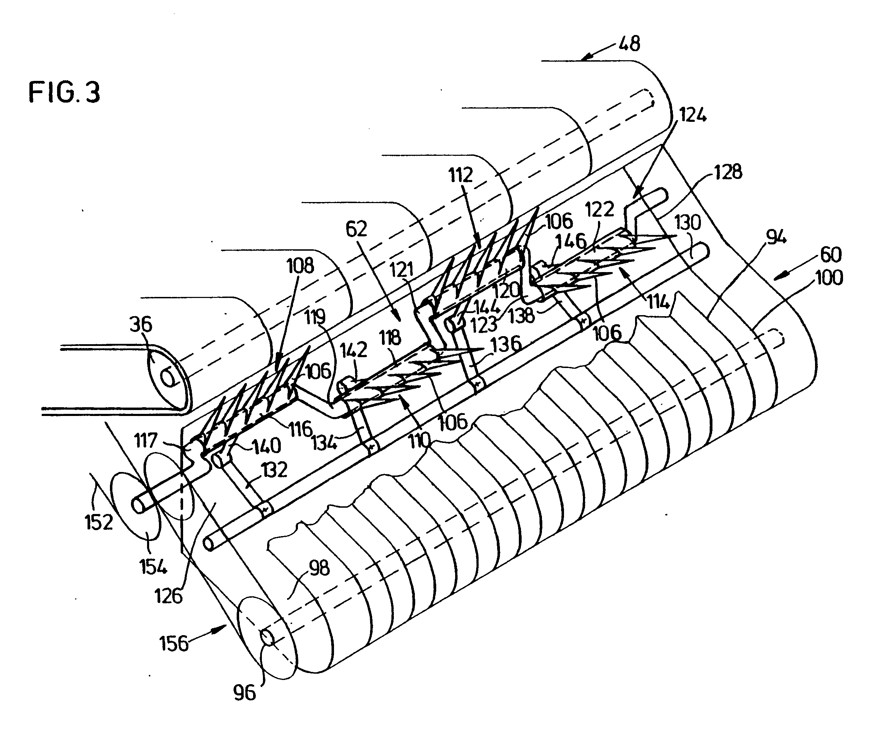

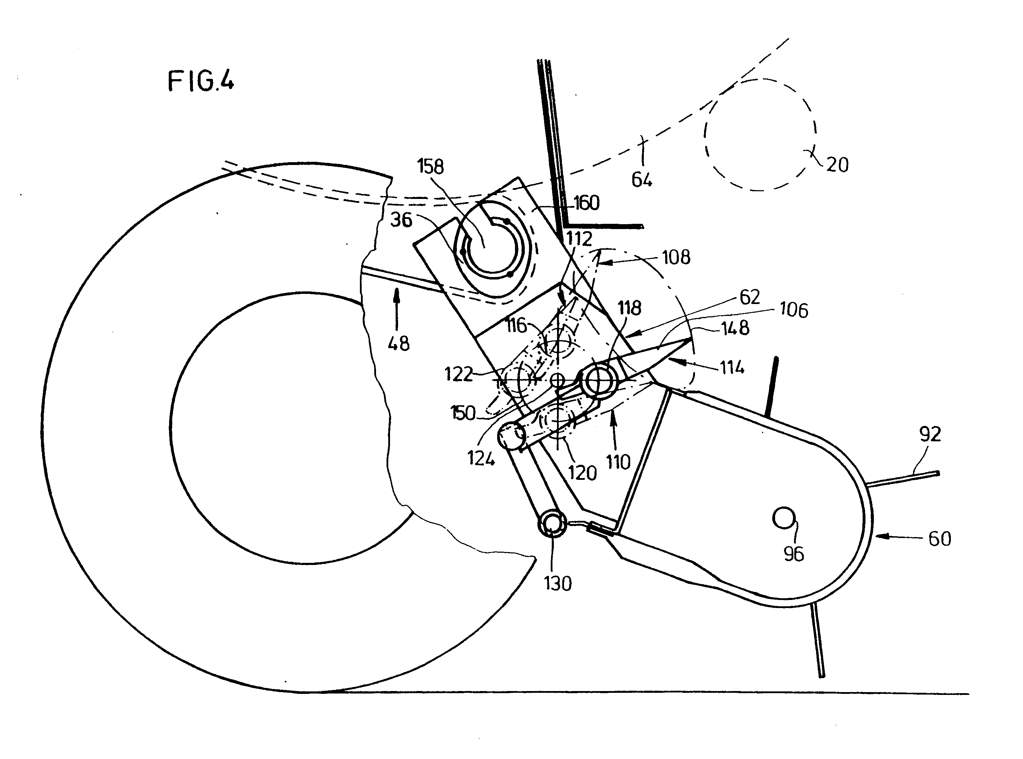

The pick-up 60 extends rearwardly and upwardly at a small angle and is conventional in that it has rotating teeth 92 (shown in Figure 4, but omitted from Figure 3 which is highly diagrammatic) which extend between neighbouring strippers 94 and which are mounted on a driven shaft 96 journalled in right and left pick-up plates 98, 100 with crop compressors 102 overhead.

The feeder fork mechanism 62 is disposed at the rearward downstream end of the pick-up 60, is angled upwardly more steeply, and terminates at the roll 36 at the inlet 58 of the baling chamber 56. This mechanism 62 has strippers which are aligned with the pick-up strippers 94. Crop advancing tines 106 are arranged to extend between the strippers. The tines 106 are rigidly attached in four groups of five 108, 110, 112, 114 to four tubes 116, 118, 120, 122 respectively rotatably received on four crank pins 117, 119, 121, 123 of the crankshaft 124 which is journalled in right and left side plates 126, 128 of the feeder fork mechanism 62.

A shaft 130 is disposed below the crankshaft 124 and arms 132, 134, 136, 138 are rotatably mounted on it at intervals along its length corresponding to the tubes 116, 118, 120, 122 and are connected to the respective tubes via arms 140, 142, 144, 146 which at one end are pivotally connected via bushings to the arms 132, 134, 136, 138 and at the other are rigidly attached to the tubes 116, 118, 120, 122. In this way, when the crankshaft 124 is turned, the outer ends of the tines 106 trace out a geometric path 148. For clarity, in Figure 4 only one tine group 114 is shown in full line whilst the remaining groups 108, 110, 112 are indicated just in broken lines. When viewed in Figure 4 the crank tubes 116, 118, 120, 122 are disposed on a geometric circle 150 at angular intervals one to the next of 90°.

A chain 152 from the main drive (not shown) of the machine transmits drive to the crankshaft 124, via a sprocket 154, and in turn drive is transmitted thence, also by a chain and sprocket arrangement 156, to the pick-up shaft 96.

The roll 36 at the inlet 58 is adapted to assist in advancing the crop into the chamber 56. Unlike the remaining rolls of the machine, the inlet roll 36 is elliptical in cross section, rotating about an axis 158.

In operation, crop lying in a windrow 160 is lifted and conveyed to the inlet 58 of the baling chamber 56, by the pick-up 60 and feeder fork mechanism 62. Within the chamber 56 the oppositely moving runs 52, 54 of the belts 48, aided by the stripper roll 20, cause the crop to turn clockwise (as viewed in Figures 1 and 2) to form the bale core 64 which is of increasing size. The ends of the bale core 64 abut against the side walls of the machine. The growing bale core 64 overcomes the tension in the belts 48 brought about by the tensioning mechanisms, and the arms 68, 70 consequently swing upwardly and thus the chamber 56 increases in size to accomodate the core.

Since the inlet roll 36 is elliptical in cross section it will raise the bale core 64, which it supports, when the inlet roll 36 is in its "high" position as in Figure 4. As the roll continues to turn (anti-clockwise in Figure 4), it will reach a "low" position, as in Figure 5, after rotating a quarter of a revolution, but the bale core 64 does not remain in contact with the belts 48 trained over the roll 36 partly due to the core's inertia and partly because its descent is resisted by its frictional contact with the side walls of the machine. The effect of this is that nip 160, which is between the belts 48 and the bale core 64 at the inlet 58 and through which the crop must move to become baled, is enlarged as the roll 36 turns from its high to low position. In turn, the greater size of the nip 160 eases the passage of crop therethrough and therefore reduces the risk of plugging at the inlet 58. It is also possible that in some crop conditions the density of the bale core 64 will be enhanced by the beating or tramping effect of the inlet roll 36.

With a further quarter turn the inlet roll 36 again raises the bale core 64 to its highest position, and with another quarter turn again causes the nip 160 to enlarge fully. Thus in one revolution of the inlet roll 36 starting at the raised position of the bale core 64, it is allowed to descend, is raised, is allowed to descend, and finally is raised to the starting position again.

When the bale core 64 reaches the size of the required bale, crop flow to the inlet 58 is stopped and the bale is tied with twine and finally discharged by swinging the gate 38 upwardly.

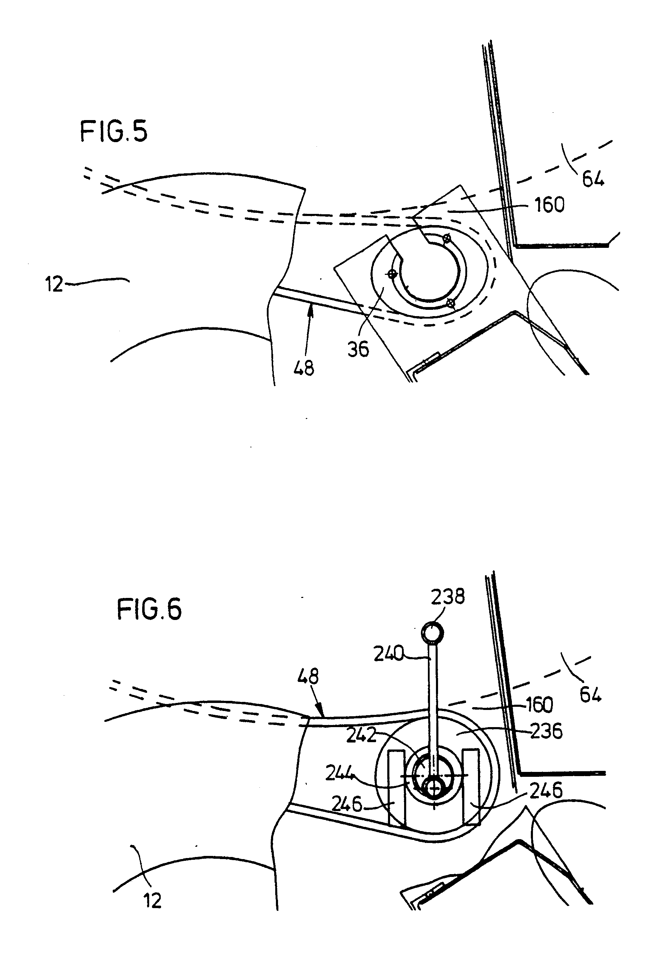

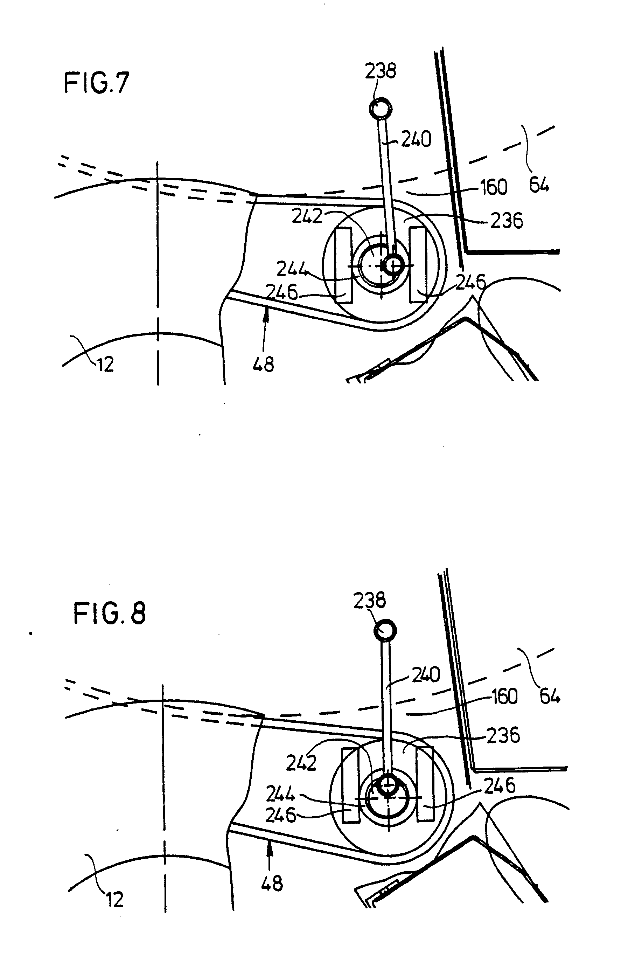

An alternative arrangement to that of the eccentric inlet roll 36 in Figures 4 and 5 is that shown in Figures 6 to 8 in which roll 236 is circular in cross-section, but is mounted eccentrically. In particular the roll 236 is suspended, from a transverse stub pivot shaft 238 above either end of the roll 236 and welded to the gate portion 38 of the side walls, by means of a pair of connecting rods 240 (only the right hand one being shown). The rods 240 are connected eccentrically to a main shaft 242 carrying the roll 236. Bearings 244 for the main shaft 242 are received between vertical guide plates 246 welded to the gate portion 38. As the roll 236 turns it moves from a "high" position in Figure 6 in which it approaches nearest to the shafts 238, through a "mid" position in Figure 7, to a "low" position in Figure 8 in which it is furthest from the shafts 238. Thus in a similar manner to that referred to in relation to Figures 4 and 5, the bale core 64 is raised and then allow to descend opening the nip 160. In a single revolution of the roll 236, starting at the raised position of the bale core 64 in Figure 6 it is allowed to descend to a low position, is raised to a mid position, and finally raised to the starting position again.

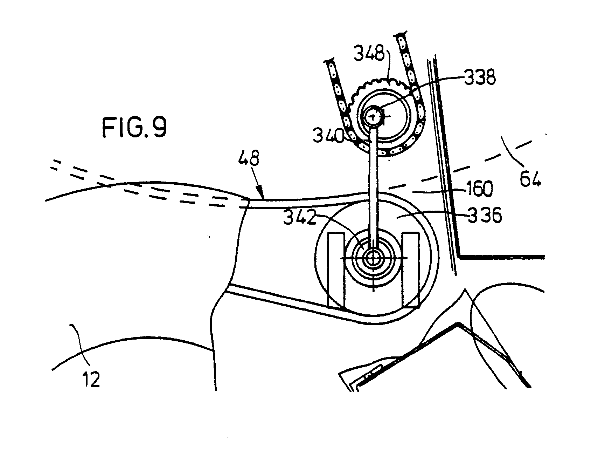

The further alternative arrangement shown in Figure 9 is a modification of that in Figures 6 to 8 in that roll 336 (corresponding to the roll 236) is similarly suspended from shafts 338 by connecting rods 340, but the shaft 338 is eccentrically received on chain driven sprockets 348 whilst the lower ends of the rods 340 are connected concentrically, rather than eccentrically, to main shaft 342 (corresponding to the shaft 242). If desired, just one only of the two sprockets 348 can be driven.

In an arrangement such as in Figure 9, the roll 336 is raised and lowered with a frequency independent of its rotational speed and dependent, of course, on the speed of the sprockets 348 so that an optimum may be chosen for the frequency without associated vibrations.

## Claims

1. A machine for forming cylindrical bales of crop having a baling chamber (56) for rolling the crop into a bale, with an inlet (58) for the crop and side walls (15, 16), and a bale-supporting roll (36, 236, 336) at the inlet (58) disposed so that the crop can be fed to the baling chamber (56) between the roll (36, 236, 336) and the bale, characterised in that the roll (36, 236, 336) is arranged so that, as it turns, it raises the bale and allows it to descend in a cycle, the bale being a sufficiently tight fit against the side walls (15, 16) of the baling chamber (56) that the bale descends more slowly than it is raised and a gap is thereby opened between the bale and roll (36, 236, 336) after the bale has been raised so as to facilitate advancement of crop into the chamber (56) therethrough.

2. A machine according to claim 1 in which the baling chamber is defined by a plurality of belts trained side-by-side over rolls (22, 24 etc) characterised in that the rolls (22, 24 etc) include the said roll (36, 236, 336).

3. A machine according to claim 1 or 2 characterised in that the roll (36, 236, 336) is eccentric or eccentrically mounted.

4. A machine according to claim 3 characterised in that the said roll (36) is elliptical or oval in cross-section.

5. A machine according to claim 3 characterised in that the said roll (236, 336) is circular in cross-section and is mounted eccentrically.

6. A machine according to claim 5 characterised in that the said roll (236) is suspended from transverse pivot shafts (238) by connecting rods (240), the shafts (238) being supported by sides (15, 16) of the machine.

7. A machine according to claim 1 or 2 characterised in that the said roll (336) is circular in cross-section, is mounted concentrically, and is driven upwardly and downwardly.

8. A machine according to claim 7 characterised in that the said roll (336) is suspended from transverse pivot shafts (338) by connecting rods (340), a said pivot shaft (338) being eccentrically received on a sprocket (348) which is drivable so as to raise and lower the roll (336).

FIG.1

FIG. 2

FIG. 3

FIG.4

EP 0 383 076 A1

FIG.5

FIG.6

FIG.7

FIG.8

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2373959 (FAHR) <br> * page 3; figures 1-4 * <br> ----- | 1, 3, 4, 5 | A01F15/07 |
| | | | TECHNICAL FIELDS SEARCHED (Int. Cl.5 ) |
| | | | A01F |

The present search report has been drawn up for all claims

| Place of search | Date of completion of the search | Examiner |
|---|---|---|
| THE HAGUE | 11 MAY 1990 | VERMANDER R.H. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)